# EUROPEAN PATENT SPECIFICATION

(11) **EP 3 079 490 B1**
(45) Date of publication and mention of the grant of the patent: **04.09.2019**
(21) Application number: 14805878.7
(22) Date of filing: 28.11.2014
(51) Int. Cl.: A23G 9/26, A23G 9/32, A23G 9/48

(54) **FROZEN CONFECTIONERY PRODUCT WITH AN EASY PEELABLE GEL COATING AND A METHOD FOR MANUFACTURING SAME**
GEFRORENE SÜSSWARE MIT EINEM ABZIEHBAREN GELÜBERZUG UND VERFAHREN ZUR HERSTELLUNG DAVON
PRODUIT DE CONFISERIE CONGELÉ AVEC ENROBAGE DE GEL POUVANT ÊTRE FACILEMENT PELÉ, ET SON PROCÉDÉ DE FABRICATION

(30) Priority: 10.12.2013 WO PCT/CN2013/089003
(43) Date of publication of application: 19.10.2016
(73) Proprietor: Société des Produits Nestlé S.A., 1800 Vevey (CH)
(72) Inventor: MA, Changpu, Shanghai 200442 (CN); LEAW, Kit Yee, 31450 Ipoh Perak (MY)
(74) Representative: Elleby, Gudrun
(86) International application number: PCT/EP2014/075979
(87) International publication number: WO 2015/086347

(56) References cited:
- EP-A1- 2 586 316
- WO-A1-01/30175
- WO-A1-2013/007493
- WO-A1-2013/092503
- WO-A2-2012/156538
- WO-A2-2012/156539
- US-A- 3 752 678
- ANONYMOUS: "Nestlé's first peelable ice cream rolls out worldwide", INTERNET CITATION, 16 February 2011 (2011-02-16), pages 1-2, XP002668463, Retrieved from the Internet: URL:http://www.nestle.com/Media/NewsAndFea tures/Pages/Nestles-first-peelable-ice-cre am-roll-out-worldwide.aspx [retrieved on 2012-01-31]
- "UNILIVER IN 1984", , 2 April 1985 (1985-04-02), pages 1-19, Retrieved from the Internet: URL:https://www.google.com/url?sa=t&rct=j& q=&esrc=s&source=web&cd=1&ved=0ahUKEwj8nIm lm6bcAhWFNOwKHd3ICAgQFggvMAA&url=https%3A% 2F%2Fwww.unilever.com%2FImages%2Fannual-re view-1984_tcm244-498243_1_en.pdf&usg=AOvVa w1GeTqAqgz_na9ySvvQqCg3 [retrieved on 2018-07-17]

## Description

### Field of the invention

The present invention relates to a frozen confectionery product with a peelable gel coating and to a method for manufacturing the same.

### Background

Frozen confectionery products consisting entirely of frozen gel or comprising a frozen gel coating are known and are popular in particular with children.

One example is a frozen confectionery product comprising a core consisting of a frozen confection said core being at least partially coated with a frozen flexible edible gel coating or layer. Such a frozen confectionery product is sold by Nestlé Thailand under the brand name "Eskimo Monkey". This product comprises an ice-cream core being coated with a frozen flexible edible gel layer. This gel layer can be peeled off by the consumer and eaten separately. Since the gel is resistant to liquefaction, even in the defrosted state, the product parts that have been peeled off by the consumer remain intact without melting and dripping. To facilitate the peeling, four longitudinal cutting lines are provided in the gel layer, so that four flaps of peel can be peeled off. One thereby achieves a banana-style peeling effect.

As it becomes clear from the above, an important feature of the gel used to form the peelable gel layer is that it resists to meltdown even after complete defrosting. This is achieved by the addition of stabilizers such as locust bean gum, kappa-carrageenan, sodium alginate or pectin to the mix. EP 1339290 A2 describes such a jelly or gel and its use in a composite frozen confectionery product. The content of this document is incorporated herein by reference.

WO2013064376 discloses a product with a core of ice cream which is coated with at least two visually distinct layers of jelly. The patent mentions that when the two gel layers are frozen in two separate steps, they show little adhesion between each other, so that they can be peeled off separately by a consumer. However, due to the very close characteristic, both jelly shell and core, or the different layers of jelly, can be found to adhere to each other and may be difficult to peel apart from each other during consumption in particular for children who enjoy these kinds of composite frozen confectionery products. For example, thinner layers of coating may be more difficult to peel off.

WO2013007493 describes a frozen confectionery product which comprises a core of a frozen confection, which is at least partially coated with a gel, where the core of frozen confection comprises an ice structuring protein in order to improve peelability of the gel layer and avoid adhesion to the core when peeling. This document does not describe a solution to improve peelability of a gel layer in a product with a core of gel, nor in a product with at least two layers of gel.

US3752678 discloses a frozen confectionery product comprising a core of a frozen confection, which is at least partially coated with a gel coating (whole document). The thixotropic gel may be an alginate gel containing alkali metal ions and calcium or aluminium ions, or may be a gel based on Xanthan gum.

WO2012/156539 discloses a frozen confectionery product comprising a core of a frozen confection, which is at least partially coated with a gel coating. The gelling agent is carrageenan, locust bean gum.

WO2012/156538 discloses a cutting or embossing tool for frozen confectionery products comprising at least two elements, each element comprising a void with an inner contour corresponding to the outer contour of the product to be cut or embossed. At least one of the elements comprises at least one knife or embosser with a blade or an embossing surface extending along the inner contour of the void. This tool can be used to cut one or more cutting lines or a pattern of cutting lines into the surface of a frozen confectionery product, in particular for products having a peelable gel coating. It can also be used to decorate the surface of a frozen confectionery product with an embossed pattern or image.

WO 01/30175 discloses an ice confection coating of an aqueous based sol containing a pectin and a setting agent in an amount sufficient to cause gelation of the sol. Also included are methods for preparing the coating, methods for applying the coating, and the resultant coated ice confection products.

There is therefore a need to improve on the peelability of the gel coatings in particular for composite products with multiple gel layers.

### Object of the invention

It is thus the object of the present invention is to provide a frozen confectionery product with multiple gel layers with an improved peelability.

### Summary of the invention

It was surprisingly found that the peelability of the gel coating from the frozen confection core or from other gel coatings can be improved having thin layer of frozen liquid on the surface of the gel coating(s).

Accordingly, the present invention relates a frozen confectionery product comprising a core of a frozen confection, which is at least partially coated with a gel coating, characterized in that the gel coating is at least partly coated with a barrier coating of frozen liquid facilitating the peeling of the gel coating, and wherein the liquid for the barrier coating is selected from the group consisting of water, water based coating, oil based coating, oil-in-water emulsion, water-in-oil emulsion, fruit juice, vegetable oil or combination thereof, and wherein the frozen confectionery product comprises an additional gel coating on top of the gel coating, which additional gel coating at least partly overlaps the other gel coating, and wherein the liquid for the barrier coating has a thickness from 0.01mm to 0.1mm and is between the gel coating, and wherein the gel coatings have a thickness of between 2 and 5 mm.

Without wishing to be bound by theory it is believed that the frozen liquid on the surface of the gel coating provides a separation between the gel coating and the core of 13105-EP-EPT(2) Amended specification -clean-

Without wishing to be bound by theory it is believed that the frozen liquid on the surface of the gel coating provides a separation between the gel coating and the core of the frozen confection or between the gel coating and a second gel layer. This means that the gel coating does not adhere to the abutting surface of the core or the second gel coating and the parts of the frozen confection can be easily separated when peeling the coating(s) off.

In a second aspect the invention relates to a method for manufacturing a frozen confectionery product comprising the following steps:
- filling a first jelly mix into a mould, freezing the jelly mix so that it forms a first frozen gel coating in the mould and sucking off the unfrozen jelly mix,
- filling a second jelly mix into the mould, freezing the jelly mix so that it forms a second frozen gel coating in the mould and sucking off the unfrozen jelly mix,
   thereby obtaining a shell consisting of two frozen gel coatings,
- filling a third mix forming the core consisting of a frozen confection into said shell,
- freezing and de-moulding the product,
   - wherein the first gel coating is least partly coated with a barrier coating of frozen liquid having a thickness from 0.01 mm to 0.1mm facilitating the peeling of the gel coating from one another.

### Brief description of the figure

Fig. 1 shows a gel core and gel coating shell with a frozen liquid oil barrier coating.
Fig. 2 shows a product with water being used as the 3^{rd} liquid material acting as a barrier coating.

### Detailed description of the invention

It was surprisingly found that the peelability of the gel coating from the frozen confection core can be improved having thin layer of frozen liquid on the surface of the gel coating.

The present invention is strictly defined by the claims.

Without wishing to be bound by theory it is believed that the thin layer of frozen liquid on the surface of the gel coating provides a separation between the gel coating and the core of the frozen confection or between the gel coating and a second gel layer. This means that the gel coating does not adhere to the abutting surface of the core or the second gel coating and the parts of the frozen confection can be easily separated when peeling the coating(s) off.

In the present context a gel coating may be a layer of gel which completely or partly covers a frozen confectionery core. It may have any form e.g. being a stripe or stripes. The application method of the barrier coating may adapted to the design of the gel coatings.

Further in the present context unless otherwise indicated % of a component means the % of weight based on the weight of the composition, i.e. weight/weight %.

In according with the present invention it has been found that the coating of frozen liquid in gel frozen into multi-layered or coated products has a surprising effect of improved of peelability of the gel coatings.

The liquid for the barrier coating is selected from the group consisting of water, water based coating, oil based coatings, oil-in-water emulsions, water-in-oil emulsions, fruit juice, vegetable oil or a combination thereof. For oil based coatings the vegetable oil is preferably used and may be selected from the group consisting of soya bean oil, canola oil, palm oil or combinations thereof. For water-based coatings water is preferred.

The frozen confectionery product according to the invention comprises a frozen liquid for the barrier coating having a thickness from 0.01 mm to 0.1 mm. If an liquid oil is used it is preferred that the density is 0.009g to 0.09 g per cm2 is used or if water is used a density is 0.01 to 0.1g per cm2. This thickness of the barrier coating provides an easy separation between gel coating or between gel coating and/or the core of the product.

In a preferred embodiment of the invention the gel coating has a total solid content from 20 to 45% based on weight of the gel (wt) and comprises 0.2 to 2 % wt of a gelling agent, more preferably from 0.3 to 1% wt of gelling agent. The solid content and the gelling agent provide a gel coating which is both flexible and resilient enough that it can be peeled off the frozen confection core or from other gel coatings without breakage.

A gel coating preferably comprises gelling agent(s) selected from the group consisting of konjac, carrageenan, xanthan, locust bean gum, alginates, pectin, gellan gum, agar and starch or a combination thereof.

The gel coating composition of the present invention may further include one or more additional ingredients such as flavors, sweeteners, colorants, acids, setting salts, buffer salts or a combination thereof.

Sweeteners can include, for example, sucrose, fructose, dextrose, maltose, dextrin, levulose, tagatose, galactose, corn syrup solids and other natural or artificial sweeteners. Sugarless sweeteners can include, but are not limited to, sugar alcohols such as maltitol, xylitol, sorbitol, erythritol, mannitol, isomalt, lactitol, hydrogenated starch hydrolysates, and the like, alone or in combination. Usage level of the flavors, sweeteners and colorants will vary greatly and will depend on such factors as potency of the sweetener, desired sweetness of the product, level and type of flavor used and cost considerations. Combinations of sugar and/or sugarless sweeteners may be used.

In a preferred embodiment of the frozen confectionery product the at least one gel coating comprises 20 to 45 % wt of sweetener, preferably from 30 to 43 % wt. Advantageously, the sweetener is sucrose or glucose syrup or a combination thereof. In a further preferred embodiment of the invention, the sweetener consists of 25% wt sugar and 15% wt glucose syrup.

A preferred recipe for a gel coating comprises 15-25% sucrose, 15-20% glucose syrup, 0.3-0.6% kappa-carrageenan, 0.2-0.5% locust bean gum, 0.05-0.2% Potassium Chloride, 0.1-0.3% Monosodium phosphate, 0.2-0.5% citric acid, flavors and colors.

The frozen confectionery product according to the invention may comprises one or more additional gel coating(s) on top of or beneath the gel coating, which additional gel coatings at least partly overlaps with the other gel coating. In this embodiment it is preferred that either all the gel coating has an at least partly barrier coating or every second gel coating is coated. This allows for an easy peeling of the gel coatings from each other.

In an embodiment where the frozen confection has more than one gel coating each gel coating may be pulled off separately due to the easy separation of the gel layers resulting from frozen liquid between the gel coatings.

The frozen confection product according to the invention may be provided with at least one cutting line allowing peeling off the gel-coating at least partially. The cutting line does not necessarily have to extend through the complete gel coating. In particular, according to one embodiment of the invention, it is possible that the depth of the cutting line or lines corresponds to the thickness of an outer gel layer. In this case, the gel coating can be peeled off partially, i.e. only the outer gel layer can be peeled off, while the inner gel layer, which is not provided with any cutting lines, remains intact. If the frozen confection product is not provided with cutting lines the gel coating may be pulled away from the core, torn apart and then peeled off.

According to a preferred embodiment of the invention, several cutting lines extending longitudinally across the gel coating are provided, so that the coating can be peeled off by pulling down stripes, similar to peeling a banana. As mentioned above, it is possible that all of the layers constituting the coating or only an outer layer or several outer layers are peeled off.

Alternatively, the cutting line can extend spirally over the gel layer, thus allowing to peel-off the gel-layer in a continuous spiral. A spiral peel, wherein the complete gel layer can be peeled off in one piece, has an interesting play-value and renders the product very attractive.

In one embodiment, the frozen confectionery product may comprise a core consisting of a frozen flexible edible gel at least partially coated with a frozen flexible edible gel coating, the gel coating comprising one or more gel coatings, wherein at least the gel core or one of the gel coating has a layer of frozen liquid on the surface of the gel which has been added to it e.g. by spraying.

According to a preferred embodiment of the invention, the product comprises a holder stick having an upper portion which is inserted into the core. This allows easy handling and consumption. The consumer can hold the stick with one hand, and peel off the gel layer with the other hand or using the teeth. Alternatively it is also possible to make products without a stick, for example in a dome shape or in a shape imitating the shape of a fruit such as an apple or a pear. These products can then be consumed as a dessert using a plate and a spoon.

According to a preferred embodiment of the invention, the gel layer comprises one or more gelling hydrocolloids, in particular a polyanionic gelling hydrocolloid. This leads to the desired consistency and peelablity. Gelling properties can be achieved by various stabilisers and combinations thereof. An overview of stabilisers used in ice cream and indications on its gelling properties can be found in literature such as "Ice Cream, Sixth Edition, R.T. Marshall, H. D. Goff, R.W. Hartel eds., Kluwer Academic/Plenum Publishers, 2003. Optionally the gel layer can comprise a gelation controller or inhibitor. This reduces the texture degradation that normally occurs when a gel is stored hot in its liquid state for a longer time, or when it is cooled down and then reheated.

Each gel layer has a thickness of between 2 and 5 mm. A gel layer which is too thin makes the peeling difficult, since the gel layer may rupture. A gel layer which is too thick is not desirable as it is more difficult to peel, and because of the relatively high sugar content of the gel which has a negative impact on the nutritional characteristics of the product.

It should also be noted that the gel layer does not have to cover the core completely, but may cover only a part or parts of the product. In the case of a spiral cutting line, the cutting line preferably has an inclination of between 3° and 60°, preferably between 5° and 25°, with respect to a plane extending perpendicularly to the symmetry axis of the spiral. In the case where the product comprises a stick, this axis corresponds to the axis of the inserted stick. The cutting line can either be straight to form a simple spiral or ondulated. There may be several such cutting lines, e.g. two cutting lines extending spirally forming a double helix.

In a further embodiment of the invention the cutting line does not extend through the complete gel coating. In particular, it is possible that the depth of the cutting line or lines corresponds to the thickness of an outer gel coating. In this case, the gel coating can be peeled off partially, i.e. only the outer gel coating can be peeled off, while the inner gel layer, which is not provided with any cutting lines, remains intact.

In another embodiment, the cutting line forms a window-like cut-out. Such a cut-out can have virtually any shape, e.g. rectangular, circular, oval, heart-shaped or star-shaped. If the outer layer of the product consists of a peelable gel coating, then the consumer can peel off the coating covering the cut-out delimited by the cutting line, so that pieces of the gel coating can be peeled off. Instead of peeling off a cut-out, one can also peel-off the coating surrounding a cut-out shape, so that only one or several sticker-like pieces of coating having a specific shape remain. The peeling-off can either be done by the consumer, or already in the factory, so that products with shapes made of a peelable gel coating on an ice cream core can be sold.

When parallel, longitudinal cutting lines are desired, these can be cut into the gel layer using several blades arranged in such a manner that when the product is lowered between these blades and then pulled out, the lines are cut into the gel coating . It should be noted that, although the cutting lines preferably extend through the entire gel coating, so that it can be peeled off entirely, they can also only cut through an outer gel layer, leaving an inner gel layer intact. This results then in a product where only the outer gel layer can be peeled off, revealing an inner gel layer (having preferably a different color). It is also possible to have different cutting lines in the inner layer that have been cut or created in a previous step.

To cut spiral cutting line into the gel coating, a cutting tool as described in the International Patent Application PCT/CN11/077465 filed on July 22nd, 2011 can be used. The content of this application is herewith incorporated by reference.

The frozen confection forming the core can comprise ice cream, milk ice, water ice, sherbet, sorbet or a gel.

In a desirable design to facilitate the peeling, four longitudinal cutting lines are provided in the gel layer, so that four flaps of peel can be peeled off. One thereby achieves a banana-style peeling effect. The number of flaps may vary e.g. being 3 to 5 or more for different product designs.

There is also disclosed a frozen confectionery product comprising a core of gel, which is at least partially coated with a gel coating, characterized in that the core is at least partly coated with a barrier coating of frozen liquid facilitating the peeling of the gel coating from the core. In this version the inner gel coating may be with or without a barrier coating of frozen liquid on its surface.

The method for manufacturing the frozen confectionery, comprises the following steps:
- filling a first jelly mix into a mould, freezing the jelly mix so that it forms a first frozen gel coating in the mould and sucking off the unfrozen jelly mix,
- filling a second jelly mix into the mould, freezing the jelly mix so that it forms a second frozen gel coating in the mould and sucking off the unfrozen jelly mix, thereby obtaining a shell consisting of two frozen gel coatings,
- filling a third mix forming the core consisting of a frozen confection into said shell,
- freezing and de-moulding the product,
   - wherein the first gel coating is least partly coated with a barrier coating of frozen liquid having a thickness from 0.01 mm to 0.1 mm facilitating the peeling of the gel coating from one another.

Alternatively, the frozen confectionery product may be produced by extruding the core and then the adding gel coating(s) done by dipping or spraying.

If the core of the frozen confection is extruded the gel coatings may be added as follows: The liquid barrier may be applied on the extruded bore before coating with the gel coating. This may for example be done by spraying of the liquid barrier on the surface of extruded core, follow by dipping into jelly mix to form the jelly coating For moulded stick with gel coating the liquid barrier may be applied on the gel coating formed by filling and back suction of the jelly. Then the liquid barrier is sprayed on the gel coating (shell) formed inside the mould and finally the core is being filled into the gel coating formed. Alternatively, the barrier coating may be added by the filling and back suction method similar to how the gel coating was made i.e filling of liquid barrier into the gel coating shell formed, then back suck the unfrozen liquid barrier, follow by filling a jelly core or a 2nd jelly mix to for a 2nd gel coating.

Thus, for a partial coating of gel coatings, the application can be done through spraying on the preformed gel coating as mentioned above.

### EXAMPLES

By way of example and not limitation, the following examples are illustrative of various embodiments of the present disclosure.

### Example 1:

Example 1 assess the effectiveness of a 3^{rd} liquid material applied in between gel coatings to form a barrier between any 2 direct contact gel coatings and thus the gel coatings are able to be peeled apart from each other during consumption.

Experiments:
1. Three Jelly mixes were prepared, namely Jelly 1, Jelly 2 and Jelly 3.
2. The difference between these 3 jellies is the color used in the recipe in order to differentiate the jelly layer and core.
3. Jelly 1 or Jelly 2 is filled into a mould and the mould was placed into a brine bath at -38 to -42 °C for freezing
4. The unfrozen jelly mix was sucked out to obtain the first frozen gel layer.
5. A 3^{rd} liquid material was applied on the jelly layer by using two different methods as below:

### Method 1:

- Filling of the liquid material into the mould with the first frozen gel layer formed, follow by removing the liquid material from the mould.
- A thin layer of frozen liquid was formed on the said frozen jelly layer.

### Method 2:

- Spraying the liquid material to the jelly layer formed inside the mould
   6. After the application of the liquid material, Jelly 3 was filled into the mould and the freezing was continued.
   7. Before the product was fully frozen, a wooden stick was inserted into the product.
   8. After the product is fully frozen, the mould was removed from the brine bath and placed into warm water for defrosting and extraction.
   9. The liquid material tested with the two methods mentioned above were soya bean oil and water.

The liquid used for the third coating on jelly 1 was liquid oil.

The liquid used for the third coating on jelly 2 was water.

**Recipe for Jelly 1**

| Ingredients | Dosage |
|---|---|
| Water | 58.75 |
| Sugar | 25.00 |
| Glucose Syrup | 15.00 |
| Citric Acid | 0.40 |
| Carrageenan | 0.40 |
| Locust Bean Gum | 0.30 |
| Monosodium Phosphate | 0.10 |
| Carmine Cochineal Color | 0.05 |
| Total | 100.00 |

**Recipe for Jelly 2**

| Ingredients | Dosage |
|---|---|
| Water | 58.67 |
| Sugar | 25.00 |
| Glucose Syrup | 15.00 |
| Citric Acid | 0.40 |
| Carrageenan | 0.40 |
| Locust Bean Gum | 0.30 |
| Monosodium Phosphate | 0.10 |
| Tumeric Color | 0.13 |
| Total | 100.00 |

**Recipe for Jelly 3**

| Ingredients | Dosage |
|---|---|
| Water | 58.80 |
| Sugar | 25.00 |
| Glucose Syrup | 15.00 |
| Citric Acid | 0.40 |
| Carrageenan | 0.40 |
| Locust Bean Gum | 0.30 |
| Monosodium Phosphate | 0.10 |
| Total | 100.00 |

### Observations:

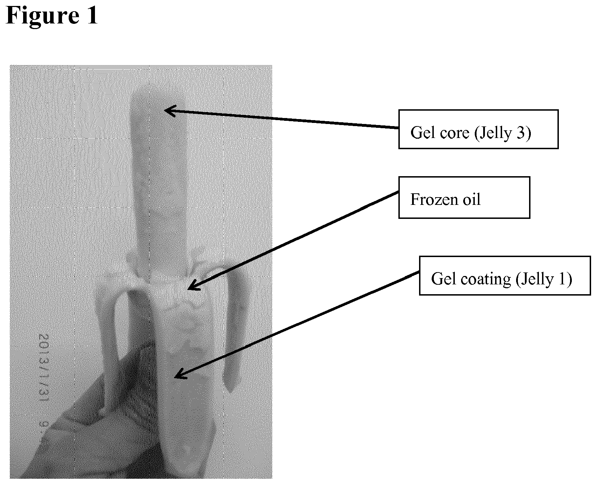

The frozen oil coating in Figure 1 below was made with method 1. It was found that the gel coating (Jelly 1) can be easily peeled off from the gel core (Jelly 3). A layer of frozen oil was formed between the gel core and gel coating and this caused the separation of these two jelly can be easily done.

The frozen oil coating was found thicker than expected. A thinner layer of frozen oil is possible to be achieved by controlling the speed of removing the liquid oil from the mould before more liquid oil get frozen and becomes thicker (same principle as making the jelly shell) the faster the removing of unfrozen oil, the thinner the layer will be formed.

Method 2 was tried also, a conventional household spraying bottle for cleaning liquids was used for spraying in this experiment. This spraying bottle was not able to deliver the expected spraying for oil. However, the effectiveness of the spray is very much depends on the equipment used. For industrial purposes a spraying technologies such as cone spraying technology can deliver homogenous spraying, a thin oil coating can be achieved on the surface of the jelly.

Figure 1 shows a gel core and gel coating shell with a frozen liquid oil layer formed in between by using method 1.

For the experiment with water used as the 3^{rd} liquid material, the application was done by spraying (method 2). The household spraying bottle was found given better spraying effect for water than oil. In fact, this type of household spraying bottles is widely used for water based liquid.

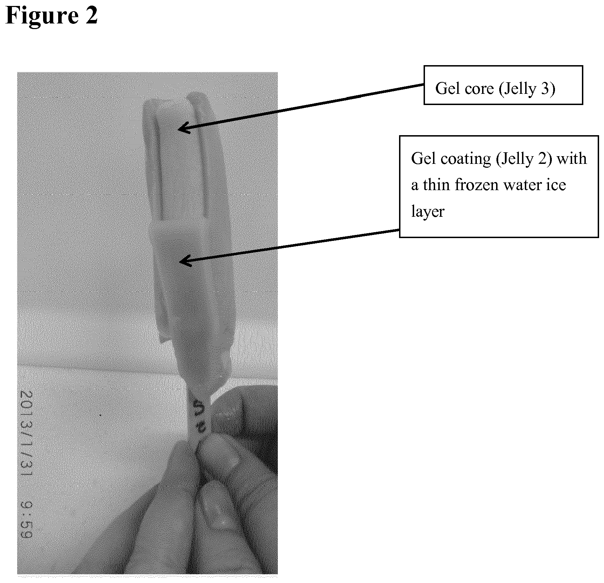

Figure 2 shows a product with water being used as the 3^{rd} liquid material as mentioned in No 4 above, it was found that the gel coating (Jelly 3) can be peeled of easily from the gel core (Jelly 2).

Figure 2 shows gel core and gel coating with a frozen water layer formed in between by using method 1. The experiment showed an improvement in the separation of 2 direct contacting gel coatings compared with standard frozen confection with two gel coatings.

The method to apply these 3rd materials between the jelly layers and jelly core can be by i) spraying or ii) filling and back sucking the unfrozen material, in order to form a thin layer of barrier coating range from 0.01 mm to 1.0 mm between the gel coatings.

## Claims

1. A frozen confectionery product comprising a core of a frozen confection, which is at least partially coated with a gel coating, **characterized in that** the gel coating is at least partly coated with a barrier coating of frozen liquid facilitating the peeling of the gel coating, and wherein the liquid for the barrier coating is selected from the group consisting of water, water based coating, oil based coating, oil-in-water emulsion, water-in-oil emulsion, fruit juice, vegetable oil or a combination thereof, and wherein the frozen confectionery product comprises an additional gel coating on top of the gel coating, which additional gel coating at least partly overlaps the other gel coating and, wherein the liquid for the barrier coating has a thickness from 0.01 mm to 0.1 mm and is between the gel coatings, and wherein the gel coatings have a thickness of between 2 and 5 mm.

2. A frozen confectionery product according to claim 1, wherein the gel coating has a total solid content from 20 to 45% based on weight of the gel (wt) and comprises 0.2 to 2 % wt of a gelling agent.

3. A frozen confectionery product according to any of the preceding claims,, wherein the gel coating comprises gelling agent(s) selected from the group consisting of konjac, carrageenan, xanthan, locust bean gum, alginates, pectin, gellan gum, agar and starch or a combination thereof.

4. A frozen confectionery product according to any of the preceding claims, wherein the gel coating(s) comprises 20 to 45 % wt of sweetener.

5. A frozen confectionery product according to any of the preceding claims wherein an inner of the gel coating and/or an outer gel coating has/have a barrier coating of frozen liquid facilitating peeling of the gel coatings.

6. A frozen confectionery product according to any of the preceding claims, wherein one or more or the gel coatings being provided with at least one cutting line

7. Frozen confectionery product according to any of the preceding claims, comprising a holder stick having an upper portion which is inserted into the core.

8. Frozen confectionery product according to any of the preceding claims, wherein the gel coating or gel coatings has/have several cutting lines extending longitudinally across gel coating(s), allowing the coating(s) to be peeled off in substantially parallel stripes.

9. Frozen Confectionery product according to any of claims 1 to 8, wherein the cutting line extends spirally across the gel coating to be peeled off in a spiral.

10. Frozen confectionery product according to any of the preceding claims, wherein the frozen confection forming the core comprises ice cream, milk ice, water ice, sherbet, sorbet or gel.

11. Method for manufacturing a frozen confectionery product according to any of the preceding claims, comprising the following steps:
- filling a first jelly mix into a mould, freezing the jelly mix so that it forms a first frozen gel coating in the mould and sucking off the unfrozen mix,
- filling a second jelly mix into the mould, freezing the jelly mix so that it forms a second frozen gel coating in the mould and sucking off the unfrozen mix, thereby obtaining a shell consisting of two frozen gel coatings,
- filling a third mix forming the core consisting of a frozen confection into said shell,
- freezing and de-moulding the product,
- wherein the first gel coating is least partly coated with a barrier coating of frozen liquid having a thickness from 0.01 mm to 0.1 mm facilitating the peeling of the gel coating from one another.

## Patentansprüche

1. Gefrorenes Konfektprodukt, das einen Kern aus einem gefrorenen Konfekt umfasst, der zumindest teilweise mit einer Gelbeschichtung überzogen ist, **dadurch gekennzeichnet, dass** die Gelbeschichtung zumindest teilweise mit einer Sperrbeschichtung aus gefrorener Flüssigkeit überzogen ist, welche das Abziehen der Gelschicht erleichtert, und wobei die Flüssigkeit für die Sperrbeschichtung ausgewählt ist aus der Gruppe, bestehend aus Wasser, wasserbasierender Beschichtung, ölbasierender Beschichtung, Öl-in-Wasser-Emulsion, Wasser-in-ÖI-Emulsion, Fruchtsaft, Pflanzenöl, oder einer Kombination davon, und wobei das gefrorene Konfektprodukt eine zusätzliche Gelbeschichtung auf der Oberseite der Gelbeschichtung umfasst, wobei die zusätzliche Gelbeschichtung zumindest teilweise die andere Gelbeschichtung überlappt und wobei die Flüssigkeit für die Sperrbeschichtung eine Dicke von 0,01 mm bis 0,1 mm aufweist und sich zwischen den Gelbeschichtungen befindet, und wobei die Gelbeschichtungen eine Dicke von zwischen 2 und 5 mm aufweisen.

2. Gefrorenes Konfektprodukt nach Anspruch 1, wobei die Gelbeschichtung einen Gesamtfeststoffgehalt von 20 bis 45 Gew.-%, bezogen auf das Gewicht des Gels (Gew.), aufweist und zu 0,2 bis 2 Gew.-% ein Geliermittel umfasst.

3. Gefrorenes Konfektprodukt nach einem der vorstehenden Ansprüche, wobei die Gelbeschichtung (ein) Geliermittel umfasst, das bzw. die aus der Gruppe ausgewählt sind, die aus Konjac, Carrageen, Xanthan, Johannisbrotgummi, Alginaten, Pektin, Gellangummi, Agar und Stärke oder einer Kombination davon besteht.

4. Gefrorenes Konfektprodukt nach einem der vorstehenden Ansprüche,
wobei die Gelbeschichtung(en) zu 20 bis 45 Gew.-% Süßungsmittel umfasst bzw. umfassen.

5. Gefrorenes Konfektprodukt nach einem der vorstehenden Ansprüche, wobei ein Inneres der Gelbeschichtung und/oder eine äußere Gelbeschichtung eine Sperrbeschichtung aus gefrorener Flüssigkeit aufweist bzw. aufweisen, die das Ablösen der Gelbeschichtungen erleichtert.

6. Gefrorenes Konfektprodukt nach einem der vorstehenden Ansprüche, wobei eine oder mehrere oder die Gelbeschichtungen mit mindestens einer Schnittlinie versehen sind, die das Ablösen der Gelbeschichtung zumindest teilweise erlaubt.

7. Gefrorenes Konfektprodukt nach einem der vorstehenden Ansprüche, das einen Haltestab mit einem oberen Abschnitt umfasst, der in den Kern eingesetzt ist.

8. Gefrorenes Konfektprodukt nach einem der vorstehenden Ansprüche, wobei die Gelbeschichtung oder die Gelbeschichtungen mehrere Schnittlinien aufweist bzw. aufweisen, die sich in Längsrichtung über der bzw. den Gelbeschichtung(en) hinweg erstrecken, wodurch die Beschichtung(en) in im Wesentlichen parallelen Streifen abgelöst wird bzw. werden.

9. Gefrorenes Konfektprodukt nach einem der Ansprüche 1 bis 8, wobei sich die Schnittlinie spiralförmig über die abzulösende Gelbeschichtung erstreckt, um in einer Spirale abgezogen zu werden.

10. Gefrorenes Konfektprodukt nach einem der vorstehenden Ansprüche,
wobei das gefrorene Konfekt, das den Kern bildet, Eiscreme, Milcheis, Wassereis, Fruchteis, Sorbet oder Gel umfasst.

11. Verfahren zur Herstellung eines gefrorenen Konfektprodukts nach einem der vorstehenden Ansprüche, das die folgenden Schritte umfasst:
- Einfüllen einer ersten Gelee-Mischung in eine Form, Einfrieren der Gelee-Mischung, so dass sie in der Form eine erste gefrorene Gelbeschichtung bildet, und Absaugen der ungefrorenen Mischung,
- Einfüllen einer zweiten Gelee-Mischung in die Form, Einfrieren der Gelee-Mischung, so dass sie in der Form eine zweite gefrorene Gelbeschichtung bildet, und Absaugen der ungefrorenen Mischung,
wodurch eine Hülle erhalten wird, die aus zwei gefrorenen Gelbeschichtungen besteht,
- Einfüllen einer dritten Mischung, die den Kern bildet, der aus einer gefrorenen Süßware besteht, in die Schale,
- Einfrieren und Entformen des Produkts,
- wobei die erste Gelbeschichtung zumindest teilweise mit einer Sperrbeschichtung aus gefrorener Flüssigkeit mit einer Dicke von 0,01 mm bis 0,1 mm beschichtet ist, was das Ablösen der Gelbeschichtung voneinander erleichtert.

## Revendications

1. Produit de confiserie congelé comprenant un coeur d'une confiserie congelée, qui est au moins partiellement enrobé d'un enrobage de gel, **caractérisé en ce que** l'enrobage de gel est au moins partiellement enrobé avec un enrobage protecteur de liquide congelé facilitant le pelage de l'enrobage de gel, et dans lequel le liquide pour l'enrobage protecteur est choisi dans le groupe constitué d'eau, enrobage à base d'eau, enrobage à base d'huile, émulsion huile-dans-eau, émulsion eau-dans-huile, jus de fruits, huile végétale ou une combinaison de ceux-ci, et dans lequel le produit de confiserie congelé comprend un enrobage de gel supplémentaire en plus de l'enrobage de gel, lequel enrobage de gel supplémentaire chevauche au moins partiellement l'autre enrobage de gel et, dans lequel le liquide pour l'enrobage protecteur a une épaisseur allant de 0,01 mm à 0,1 mm et se trouve entre les enrobages de gel, et dans lequel les enrobages de gel ont une épaisseur comprise entre 2 et 5 mm.

2. Produit de confiserie congelé selon la revendication 1, dans lequel l'enrobage de gel a une teneur totale en solides allant de 20 à 45 % sur la base du poids du gel (wt) et comprend 0,2 à 2 % en poids d'un agent gélifiant.

3. Produit de confiserie congelé selon l'une quelconque des revendications précédentes, dans lequel l'enrobage de gel comprend un ou des agent(s) gélifiant(s) choisi(s) dans le groupe constitué de konjac, carraghénane, xanthane, gomme de caroube, alginates, pectine, gomme gellane, agar-agar et amidon ou une combinaison de ceux-ci.

4. Produit de confiserie congelé selon l'une quelconque des revendications précédentes,
dans lequel le ou les enrobage(s) de gel comprennent 20 à 45 % en poids d'édulcorant.

5. Produit de confiserie congelé selon l'une quelconque des revendications précédentes dans lequel un intérieur de l'enrobage de gel et/ou un enrobage protecteur externe a/ont un enrobage protecteur de liquide congelé facilitant le pelage des enrobages de gel.

6. Produit de confiserie congelé selon l'une quelconque des revendications précédentes, dans lequel un ou plusieurs des enrobages de gel sont pourvus d'au moins une ligne de coupe permettant le pelage de l'enrobage de gel au moins partiellement.

7. Produit de confiserie congelé selon l'une quelconque des revendications précédentes, comprenant un bâtonnet de support ayant une partie supérieure qui est insérée dans le coeur.

8. Produit de confiserie congelé selon l'une quelconque des revendications précédentes, dans lequel l'enrobage de gel ou les enrobages de gel a/ont plusieurs lignes de coupe s'étendant longitudinalement à travers le ou les enrobage(s) de gel, permettant à l'enrobage ou aux enrobages d'être pelés en bandes sensiblement parallèles.

9. Produit de confiserie congelé selon l'une quelconque des revendications 1 à 8, dans lequel la ligne de coupe s'étend en spirale à travers l'enrobage de gel pour être pelé en une spirale.

10. Produit de confiserie congelé selon l'une quelconque des revendications précédentes,
dans lequel la confiserie congelée formant le coeur comprend de la crème glacée, de la glace au lait, de la glace à l'eau, du sorbet laitier, du sorbet ou un gel.

11. Procédé de fabrication d'un produit de confiserie congelé selon l'une quelconque des revendications précédentes, comprenant les étapes suivantes :
- remplissage d'un premier mélange de gelée dans un moule, congélation du mélange de gelée de sorte qu'il forme un premier enrobage de gel congelé dans le moule et aspiration du mélange non congelé,
- remplissage d'un deuxième mélange de gelée dans un moule, congélation du mélange de gelée de sorte qu'il forme un deuxième enrobage de gel congelé dans le moule et aspiration du mélange non congelé,
ce qui permet d'obtenir une coque constituée de deux enrobages de gel congelés,
- remplissage d'un troisième mélange formant le coeur constitué d'une confiserie congelée dans ladite coque,
- congélation et démoulage du produit,
- dans lequel le premier enrobage de gel est au moins partiellement enrobé d'un enrobage protecteur de liquide congelé ayant une épaisseur allant de 0,01 mm à 0,1 mm facilitant le pelage de l'enrobage de gel l'un par rapport à l'autre.
